(19) Europäisches Patentamt
European Patent Office
Office européen des brevets

(11) **EP 4 322 064 A1**

(12) **EUROPEAN PATENT APPLICATION**

(43) Date of publication:
**14.02.2024 Bulletin 2024/07**

(21) Application number: **23184761.7**

(22) Date of filing: **11.07.2023**

(51) International Patent Classification (IPC):
***G06N 3/0495*** (2023.01)

(52) Cooperative Patent Classification (CPC):
**G06N 3/0495**; G06N 3/048; G06N 3/092

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 IN 202221043520**

(71) Applicant: **Tata Consultancy Services Limited Maharashtra (IN)**

(72) Inventors:
• **DUTTA, JEET**
**700160 Kolkata, West Bengal (IN)**
• **PAL, ARPAN**
**700160 Kolkata, West Bengal (IN)**
• **MUKHERJEE, ARIJIT**
**700160 Kolkata, West Bengal (IN)**
• **DEY, SWARNAVA**
**700160 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR JOINTLY PRUNING AND HARDWARE ACCELERATION OF PRE-TRAINED DEEP LEARNING MODELS**

(57) This disclosure relates generally to method and system for jointly pruning and hardware acceleration of pre-trained deep learning models. The present disclosure enables pruning a plurality of DNN models layers using an optimal pruning ratio. The method processes a pruning request to transform the plurality of DNN models and the plurality of hardware accelerators into a plurality of pruned hardware accelerated DNN models based on at least one user option. The first pruning search option executes a hardware pruning search technique to perform search on each DNN model and each processor based on at least one of a performance indicator and an optimal pruning ratio. The second pruning search option executes an optimal pruning search technique, to perform search on each layer with corresponding pruning ratio. The layer assignment sequence technique creates a static load distributor by partitioning the optimal layer of the DNN model into a plurality of layer sequences and assigning each layer sequence to corresponding processing element of hardware accelerators.

300

receive from a user a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search — 302

transform the plurality of DNN models and the plurality of hardware accelerators, into a plurality of pruned hardware accelerated DNN models based on atleast one of the user options — 304

identify an optimal layer associated with the pruned hardware accelerated DNN model based on the user option — 306

create by using a layer assignment sequence technique a static load distributor by partitioning the optimal layer of the DNN model into a plurality of layer sequences and assigning each layer sequence to corresponding processing element of hardware accelerators — 308

FIG.3

EP 4 322 064 A1

**Description**

CROSS-REFERENCE TO RELATED APPLICATIONS AND PRIORITY

The present application claims priority to Indian application no. 202221043520, filed on July 29, 2022.

TECHNICAL FIELD

The disclosure herein generally relates to pruning deep neural network (DNN), and, more particularly, to method and system for jointly pruning and hardware acceleration of pre-trained deep learning models.

BACKGROUND

In recent trends, artificial intelligence (AI) and machine learning (ML) techniques are emerging towards embedded system-based applications such as smartphones, consumer electronic devices, smart vehicles, and thereof providing advanced and personalized features. In ML models specifically deep neural networks (DNNs) have recently enabled unprecedented levels of intelligence on numerous systems providing effective applications in a broad spectrum of domains such as computing vision, healthcare, autonomous driving, machine translation, and many others. Though automated feature engineering exists for deep learning models to a large extent, building complex models require extensive domain knowledge or huge infrastructure for employing techniques such as neural architecture search (NAS).
In many industrial applications, there is a requirement of in-premises decision to sensors, which makes deployment of deep learning models on edge devices a desirable option. As a replacement, designing application specific deep learning models from scratch, where transformation of already built models can be achieved speedier with reduced cost. In such scenarios, an efficient DL model search approach is required to select from a pre-trained deep learning models which further schedules inference workload on heterogeneous computing platforms used in edge devices.
In existing approaches, most of the resource-constrained devices used in Industrial Internet of Things (IIoT), robotics, Industry 4.0, and thereof lacks with features in DNN models, accuracy, inference latency on the edge hardware configurations suitable for business requirements. In addition, porting the relevant DNN models to a new hardware requires decision making skills with faster time. Moreover, optimizing already ported DNN models are resource-constrained having ensemble embedded targets which poses several other challenges.
In another existing approaches such as Cyber-Physical Systems (CPS) and edge computing scenarios, the target hardware configurations are less powerful in processors, memory, and battery when compared to smartphones and other enterprise hardware. Moreover, these IoT devices are often made of relatively robust and resilient hardware, with a wide range of connectivity and input/output options. Due to the fact, it is not always feasible to change the hardware for accommodating the new DNN model based on inference in such edge devices. Selecting deployment hardware based on the DNN inference workload, multiple dependencies with many different stakeholders, mandatory testing cycles, and tight schedules makes it difficult to completely replace an existing edge hardware setup. In another approach, automated transformation required a route through the model architecture dynamically composed of different network operations making a series of decisions using a reinforcement learning. However, such approach requires training data to redesign the model.

SUMMARY

Embodiments of the present disclosure present technological improvements as solutions to one or more of the above-mentioned technical problems recognized by the inventors in conventional systems. For example, in one embodiment, a system for jointly pruning and hardware acceleration of pre-trained deep learning models is provided. The processor implemented system is configured by the instructions to receive from a user, a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search. The plurality of DNN models and the plurality of hardware accelerators are transformed into a plurality of pruned hardware accelerated DNN models based on at least one of the user options. The first pruning search option executes a hardware pruning search technique, to perform search on each DNN model and each processor based on at least one of a performance indicator and an optimal pruning ratio. The second pruning search option executes an optimal pruning search technique, to perform search on each layer with corresponding pruning ratio. Further, an optimal layer associated with the pruned hardware accelerated DNN model is identified based on the user option. The layer assignment sequence technique creates a static load distributor by partitioning the optimal layer of the DNN model into a plurality of layer sequences and assigning each layer sequence to corresponding processing element of hardware accelerators.

In another aspect, a method for jointly pruning and hardware acceleration of pre-trained deep learning models is provided. The method includes receiving from a user, a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search. The plurality of DNN models and the plurality of hardware accelerators are transformed into a plurality of pruned hardware accelerated DNN models based on at least one of the user options. The first pruning search option executes a hardware pruning search technique, to perform search on each DNN model and each processor based on at least one of a performance indicator and an optimal pruning ratio. The second pruning search option executes an optimal pruning search technique, to perform search on each layer with corresponding pruning ratio. Further, an optimal layer associated with the pruned hardware accelerated DNN model is identified based on the user option. The layer assignment sequence technique creates a static load distributor by partitioning the optimal layer of the DNN model into a plurality of layer sequences and assigning each layer sequence to corresponding processing element of hardware accelerators.

In yet another aspect, a non-transitory computer readable medium for receiving from a user, a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search. The plurality of DNN models and the plurality of hardware accelerators are transformed into a plurality of pruned hardware accelerated DNN models based on at least one of the user options. The first pruning search option executes a hardware pruning search technique, to perform search on each DNN model and each processor based on at least one of a performance indicator and an optimal pruning ratio. The second pruning search option executes an optimal pruning search technique, to perform search on each layer with corresponding pruning ratio. Further, an optimal layer associated with the pruned hardware accelerated DNN model is identified based on the user option. The layer assignment sequence technique creates a static load distributor by partitioning the optimal layer of the DNN model into a plurality of layer sequences and assigning each layer sequence to corresponding processing element of hardware accelerators.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary deep neural network (DNN) model fitment system that jointly performs pruning and hardware acceleration on the layers of a pre-trained DNN model, in accordance with some embodiments of the present disclosure.

FIG.2 depicts an example architecture of the DNN model fitment system performing pruning and hardware acceleration jointly on the layers of the DNN model, in accordance with some embodiments of the present disclosure.

FIG.3 is a flow diagram of an example embodiment of a method for determining the DNN model suitable to each hardware processor and static load distribution using the systems of FIG.1 and FIG.2, in accordance with some embodiments of the present disclosure.

FIG.4 depicts partitioning the layers of the DNN model and assigning each layer to each hardware processors using the systems of FIG.1 and FIG.2, in accordance with some embodiments of the present disclosure.

FIG.5 depicts the layer sequences of the DNN model distributed to each hardware processors using the systems of FIG.1 and FIG.2, in accordance with some embodiments of the present disclosure.

FIG.6 depicts an example residual network (ResNet) architecture variant to evaluate the layers of the DNN model pruned using at least user option using the systems of FIG. 1 and FIG.2, in accordance with some embodiments of the present disclosure.

FIG.7 depicts a graph of the DNN model layers versus network sparsity pruned using a first pruning search user option executed by using a hardware pruning search technique using the systems of FIG. 1 and FIG.2, in accordance with some embodiments of the present disclosure.

FIG.8 depicts a graph of the DNN model layers searching for a fittest individual element from a population batch by using an optimal layer pruning search technique using the systems of FIG.1 and FIG.2, in accordance with some embodiments of the present disclosure.

FIG.9 depicts the sparsity differences among the models pruned with the hardware pruning search technique and the optimal pruning search technique using the systems of FIG. 1 and FIG.2, in accordance with some embodiments of the present disclosure.

FIG.10 depicts a graph representing an optimal computational latency of each layer of the DNN model of the ResNet 34 architecture trained on a computer-vision dataset used for object recognition (CIFAR) 10 datasets, using the systems of FIG.1 and FIG.2, in accordance with some embodiments of the present disclosure.

FIG.11A depicts an execution time graph on a coral tensor processing unit (TPU) incoming image wait time to complete the process of a previous image, using the systems of FIG.1 and FIG.2, in accordance with some embodiments of the present disclosure.

FIG.11B depicts creates the layer partitioning of the DNN model at layer 16 of the ResNet 34 architecture model executed on the coral TPU processor by using a layer partitioning technique using the systems of FIG.1 and FIG.2, in accordance with some embodiments of the present disclosure.

FIG.11C depicts a graph of incoming image parallely pipelined and processed by using the layer partitioning technique with plotted latency graph using the systems of FIG. 1 and FIG.2, in accordance with some embodiments of the present disclosure.

FIG. 12 depicts a graph of the computational latency of the ResNet18 architecture trained on an Image Net dataset with processor types and outputting tensor size for each layer performed by using the layer assignment sequence technique using the systems of FIG. 1 and FIG.2, in accordance with some embodiments of the present disclosure.

FIG. 13 depicts a graph of the computational latency of aggregated residual transformation (ResNext) architecture trained on the Image Net dataset with processor types and outputting tensor size for each layer performed by using the layer assignment sequence technique using the systems of FIG. 1 and FIG.2, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for jointly pruning and hardware acceleration of pre-trained deep learning models. The system may be alternatively referred as a deep neural network (DNN) model fitment system. The method disclosed enables pruning a plurality of DNN models layers using an optimal pruning ratio. The system 100 has two integrated stages,

1. The first stage performs pruning search based on at least one user option resulting faster DNN model search with greater accuracy, and

2. The second stage partitions the layers of each DNN model for generating an optimal scheduling of computation latency for the hardware processor(s).

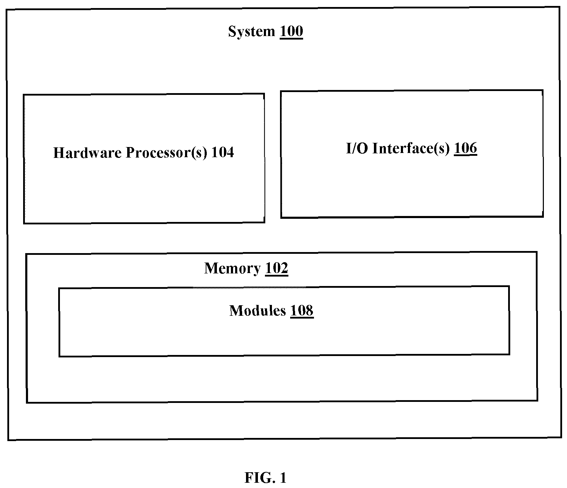

The system 100 executes a pruning request received from a user to generate one or more pruned hardware accelerated DNN models. Each pruning request is processed based on at least one user option. The user options comprise a first pruning search and a secondary pruning search. The first pruning search processes the pruning request by executing a hardware pruning search technique on each DNN model with the optimal pruning ratio. The secondary pruning search processes the pruning request by executing an optimal pruning search technique on the layers of each DNN model. Each layer is pruned with the optimal pruning ratio. The method of the present disclosure provides an efficient approach to search or prune each DNN model with reduced hyperparameters on the pre-trained deep learning models and schedules automatically inference workload on heterogeneous computing platforms used in edge devices. Also, the user option reduces computational latency of each DNN model achieving scalability, accuracy, and efficient resource utilization. Additionally, the method of the present disclosure reduces search space by finding one or more optimal pruning ratios to be applied on each of the user option available in standard deep learning libraries. Also, the system and method of the present disclosure is time efficient, accurate and scalable for achieving pruned hardware accelerated DNN models with high accuracy, latency size, and trade-off. The disclosed system is further explained with the method as described in conjunction with FIG.1 to FIG. 13 below.

Referring now to the drawings, and more particularly to FIG. 1 through FIG. 13, where similar reference characters denote corresponding features consistently throughout the figures, there are shown preferred embodiments and these embodiments are described in the context of the following exemplary system and/or method.

FIG. 1 illustrates an exemplary deep neural network (DNN) model fitment system 100 that jointly performs pruning and hardware acceleration on the layers of a pre-trained DNN model, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

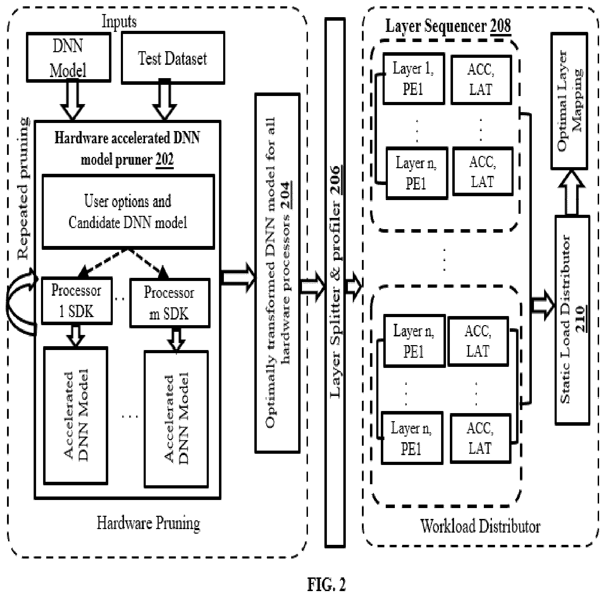

FIG.2 depicts an example architecture of the DNN model fitment system performing pruning and hardware acceleration jointly on the layers of the DNN model, in accordance with some embodiments of the present disclosure. FIG.2 includes a plurality of modules comprising a hardware accelerated deep neural network (DNN) model pruner 202, an optimally transformed DNN model 204, a layer splitter and profiler 206, a layer sequencer 208, and a static load distributor 210.

The hardware accelerated DNN model pruner 202 of the system 100 is equipped to switch between each user selected option to process each pruning request received from the user. The user option comprises the first pruning search option and the second pruning search option. The pruning request comprises the plurality of DNN models, a plurality of hardware accelerators, a plurality of target performance indicators and a plurality of user options. Each pruning request is processed individually to obtain a pruned hardware accelerated DNN model.

In one embodiment, for accelerating each of the DNN model accelerator standard development kits (SDKs) convert each DNN model for the corresponding DNN accelerator hardware. For instance, the following command converts a standard tensor flow model to the hardware accelerated version for the coral edge tensor processing unit(s) (TPU) "edgetpu_compiler DNN_model_name.tflite".

The optimally transformed DNN model 204 of the system 100 captures and records a plurality of pruned hardware accelerated DNN models for layer splitting. Pruning each DNN model refers to setting certain parameters to zero, which increases a sparsity of the DNN network. In most cases, pruning reduces an inference latency of the DNN network. However, a latency reduction is associated with cost which reduces the inference accuracy. The latency and the inference latency are inversely proportional with higher pruning ratio, and lower. Further, the two different classes of pruning are namely, an unstructured pruning and a structured pruning.

Unstructured pruning discards weights throughout each of the DNN model, based on a random rule and a magnitude rule which causes minimal accuracy loss. Unstructured pruning results each pruned DNN model with sparse weight matrices. The standard deep learning runtime libraries are designed to work on dense matrices, and the sparsity of such DNN model are with higher inference acceleration. Structured pruning in a convolutional layer improves the latency and removal of complete filters results with inference speedup but causes larger drop in inference accuracy.

The layer splitter and profiler 206 of the system 100 identifies an optimal layer associated with the pruned hardware accelerated DNN model based on the user option. It is noted when an optimally pruned and accelerated DNN model is generated for a particular processor or processing element, the individual layers are splitted for workload balancing. Most of the standard deep learning libraries provides a method to split the DNN model graph into the individual layers.

The layer sequencer 208 of the system 100 partitions the optimal layer of each DNN model into a plurality of layer sequences.

The static load distributor 210 of the system 100 distributes each layer sequence for optimal layer mapping. The present disclosure is further explained considering an example, where the system 100 determines at least one of a pruned hardware accelerated DNN model using the systems of FIG.1 and FIG.2.

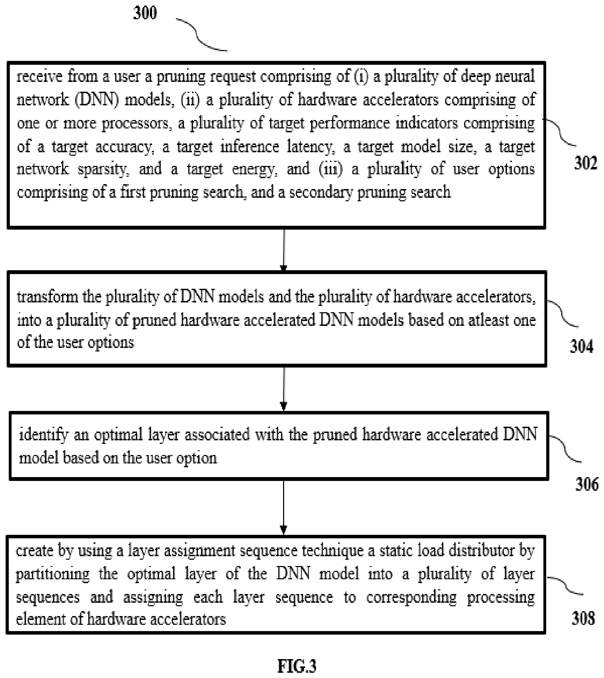

FIG.3 is a flow diagram of an example embodiment of a method for determining the DNN model suitable to each hardware processor and static load distribution using the systems of FIG.1 and FIG.2, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.2 through FIG. 13 Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring now to the steps of the method 300, at step 302, the one or more hardware processors 104 receive a pruning request comprising a plurality of deep neural network (DNN) models, a plurality of hardware accelerators comprising of one or more processors, a plurality of target performance indicators and a plurality of user options. The plurality of target performance indicators comprises of a target accuracy, a target inference latency, a target model size, a target network sparsity, and a target energy. Each target performance indicator acts as a baseline value. The plurality of user options comprises of the first pruning search and the secondary pruning search.

Considering an example, where the DNN model fitment system 100 may receive the pruning request as an input from user(s). The pruning request is processed by the DNN model fitment system 100 by jointly pruning and hardware accelerations. The pruning request is processed based on the selected user option which outputs a transformed pruned hardware accelerated DNN models. The example ResNet 18 architecture have layer wise probability distribution of ResNet18 pruned variants using the first pruning search option.

Referring now to the steps of the method 300, at step 304, the one or more hardware processors 104 transform the plurality of DNN models and the plurality of hardware accelerators into a plurality of pruned hardware accelerated DNN models based on at least one user option. The user options are referred as the pruning search techniques which manages to increase or decrease the pruning level to prune each DNN model as much as possible without losing the inference accuracy. One such handle is the pruning ratio ($\Delta$), which when increased, increases the pruning level, and vice versa.

Search space defines the pruning ratio $\Delta \in [(0,1)]$ which quantifies the pruning level and may comprise a coarse-grained pruning search or a fine-grained pruning search space $\mathcal{P} \in \mathbb{R}^d$, depending on a step size between the pruning ratios. The coarse-grained pruning search space is defined with a fixed step size for example 0.1. Such fixed step size can result in the pruning search space with {0.1,0.2, ...,0.9}. The fine-grained pruning search space where the pruning ratio $\Delta$ can take any value s between 0 and 1 with the step size that ranges up to $10^{-3}$. It is to be noted that experimental evaluations were performed using the coarse-grained pruning search space and the fine-grained pruning search space.

From each pruning search space, the number of combinations is estimated to obtain an optimal set of pruning ratios for each DNN model. The coarse-grained space is represented as $\mathcal{P}_c \in \mathbb{R}^d$, considering the $|\mathcal{P}_c|^L$ combinations to find the optimal pruning ratios that achieve maximum sparsity, without accuracy loss. As an example, if $|\mathcal{P}_c| = 100\Delta$ values, {0.01,0.02,0.03,...,0.98,0.99}, and pruning with a dense convolutional network (DenseNet-161) model with 161 layers and experimenting with $100^{161}$ different combinations. Moreover, each such combination essentially evaluated with the accuracy of the pruned DNN model on the test dataset, which incurs additional cost.

It may be noted that the above example illustrates an ideal pruning ratio to find the best combination of $\Delta$ values for all layers of each DNN model. However, the standard deep learning libraries provides a global pruning strategy to search and specify a $\Delta$ value from only one $\mathcal{P}$, valid for the whole DNN model. This approach is faster, and the $\Delta$ value found through this method is often suboptimal.

To process the pruning request, the hardware accelerated DNN model pruner 202 of the system 100 identifies the user option for processing to transform the plurality of DNN models and the plurality of hardware accelerators into a plurality of pruned hardware accelerated DNN models. If the user option is the first pruning search option, then the system triggers the hardware pruning search technique, to perform search on each DNN model and each processor based on at least one of a performance indicators and an optimal pruning ratio. The referred user option is pertinent for example scenarios where there is limited time for model fitment, such as a quick prototyping in a software service industry. This technique performs a heuristic search to identify good sparsity values at faster rate and without a drop in at least one of the performance indicator and inference accuracy. It is noted that that the method of the present disclosure can be easily integrated in available standard deep learning libraries for finding most optimal hyperparameters automatically.

In one embodiment, the hardware pruning search technique (Table 1) performs the steps by initializing each DNN model, a maximum pruning ratio with an upper bound value, an initial pruning ratio, a step size updated with a set of entities, a global pruning library, at least one of accelerating elements, a number of processing elements, a maximum resolution, and a plurality of first performance indicators comprising of an accuracy, an inference, a latency, a model size, and an energy of the hardware accelerated DNN models. Further, the method computes at least one of the first performance indicator value by pruning using the pruning ratio and accelerating corresponding DNN model. When a change is observed on at least one of the first performance indicator value matching with corresponding target performance indicator value a revised pruning ratio is updated. Recording, the revised pruning ratio when at least one of the first performance indicator value is nearest to the target performance indicator value and modifying the step size.

## Table 1 - Hardware pruning search technique

| Hardware pruning search technique automatically search for the best pruning ratios and latencies |
|---|
| Data: M: Model to prune, $MAX\_PR$: Upper bound to Pruning Ratio, $START\_PR$: Lower bound to Pruning Ratio, $STEP\_SIZE$: Initial step size for updating pruning |

ratio $\Delta$, Prune: standard Deep Learning library method for global pruning, Accelerate$i$: SDK method for acceleration $ith$ processing elements, M: Number of processing elements, MAX_RESOLUTION: the threshold for reducing the step size

Result: Generates a set of pruned and accelerated models M' $hwi$ for each processing element $i$: with the same accuracy as the base model.

1 $A_{base} \leftarrow$ *Accuracy of* $\mathcal{M}$; /* Initialize prerequisites */

/* Search hyperparameters */

2 PR←*START_PR*.

3 update←*STEP_SIZE*;

4 *BEST_PR* ← 0;

/* Main search starts here */

5 while PR < *MAX_PR* && update > *MAX_RESOLUTION* do

6 $\mathcal{M}'$ ←Prune ($\mathcal{M}$, PR);

/* Accelerate the pruned model on every Processing Element (PE) using the SDK. */

7 for l = 1,2,..., $\mathcal{M}$ do

8 $\mathcal{M}'_{hwi}$ ←Accelerate$i$ ($\mathcal{M}'$);

9 $A_{prune} \leftarrow$ *Accuracy of* $\mathcal{M}'$ ;

10 if $A_{prune}$<$A_{base}$ then

11 break;

12 end

13 end

14 if $A_{prune} \geq A_{base}$ then

15 Store the ratio and latency and continue;

16 *BEST_PR* ← *PR*;

17 PR←PR + update;

18 end

19 else

```
20 PR ← BEST _PR;

21 update←update/2;

22 Increment PR by update;

23 end

24 end
```

The hardware pruning search technique provides the global pruning search that achieves maximum pruning, considering the standard development kit acceleration, and at the same time preserves accuracy. It uses the fine-grained search space for finding the optimal pruning ratio $\Delta$. To find the optimal pruning ratio $\Delta$, the following steps are performed in above Table 1,

**Step** 1: Initializing the pruning ratio $\Delta$ and the step size update $\in$ (0,1). Define an upper bound for $\Delta$ MAX_PR.

**Step 2:** Accelerate the model $\mathcal{M}$ using the corresponding SDK of a participating processing element and find out its accuracy $A_{prune}$.

**Step 3:** If there is an accuracy drop due to the SDK acceleration for any of the accelerated models (lines: 9-10 of Table 1), provides the pruning ratio revision by using a less aggressive update.

**Step 4:** If there is no accuracy drop due to pruning and subsequent acceleration, storing the pruning ratios as the best and incrementing by the step size.

**Step 5:** However, if there is an accuracy drop for any of the accelerated models, revert the pruning ratios to last best-known value, decreasing the step size by half.

**Step 1:** Initializing the pruning ratio $\Delta$ and the step size update $\in$ (0,1). Define an upper bound for $\Delta$ MAX_PR in line 2 of Table 1.

**Step 2:** Accelerate the model $\mathcal{M}$ using the corresponding SDK of a participating processing element and find out its accuracy $A_{prune}$ in lines 7-9 of Table 1.

**Step 3:** If there is an accuracy drop due to the SDK acceleration for any of the accelerated models (lines: 9-10), provides the pruning ratio revision by using a less aggressive update in lines 20-22 of Table 1.

**Step 4:** If there is no accuracy drop due to pruning and subsequent acceleration, storing the pruning ratios as the best and incrementing by the step size in lines 14-17 of Table 1.

**Step 5:** However, if there is an accuracy drop for any of the accelerated models, revert the pruning ratios to last best-known value, decreasing the step size by half.

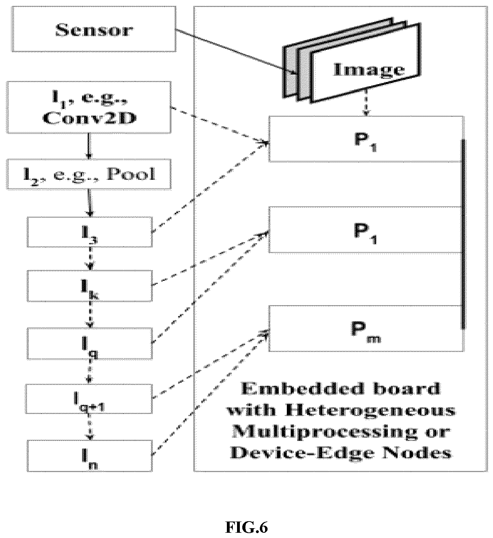

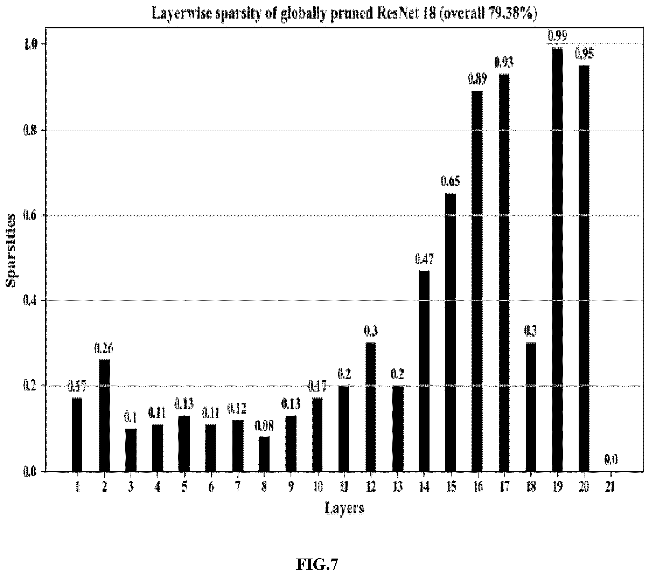

It has been experimentally evaluated and is represented in FIG.6 and FIG.7 where the hardware pruning search technique identifies highly sparse models with low latencies extremely fast. However, the experiment generates a random pruning ratio $\Delta$ for every layer in the DNN model $\mathcal{M}$. The set of random pruning ratios $\mathcal{P}$, are essentially a set of random layer wise $\Delta$ values, generating an even sparser model, compared to the hardware pruning search technique. However, the global pruning strategy failed to capture an optimal layer-wise $\Delta$ which yields sparser, even lower latency models compared to the hardware pruning search technique. Further, to find optimal combination of pruning ratio $\Delta$ values all layers require an exhaustive search over all possible (configurations)$^{Layers}$ combinations, leading to a combinatorial explosion. Such an exhaustive search is infeasible, given a practical limit on the computational capability of each DNN model fitment pipeline. In such scenarios, the second pruning search option based on optimization are designed to handle similar complex tasks.

In another embodiment, to process the pruning request with the second pruning search option the optimal pruning search technique is triggered to perform search on each layer with corresponding pruning ratio. Eventually, for scenarios having enough time and resources are available to perform search, for example a full-scale project cycle finds nearest optimal sparsity values, without a drop in the inference accuracy.

Referring now back to the above example the optimal pruning search technique (Table 2) performs the steps by initializing, each DNN model, a maximum population size, a mutation rate with highest predefined probability threshold value, a layer-wise pruning ratios, a plurality of second performance indicators comprising of an accuracy, and a network sparsity, the one or more accelerating elements, a lower bound mutation rate, and a fitness score function. Further, iteratively executes the loop until it reaches the maximum population size to create an individual element for each layer based on the pruning ratio associated with each layer of the DNN model. Here, the pruning ratio for each layer is randomly generated. Further, computing at least one of the second performance indicator value of the individual element and the hardware accelerated DNN model and recording each individual entity with corresponding pruning ratios into a population batch.

In one embodiment, optimal layer wise search is performed to determine each hardware accelerated DNN model by iteratively executing to select a fittest individual element from the population batch using the fitness score function. The fitness score function is a function that calculates an individual elements fitness in the population batch depending on a primary metrics and a secondary minimum metrics. Further, a new individual element is created randomly for selecting the layers of each DNN model and randomly changing the pruning ratios associated with each layer based on the mutation rate. Here, the mutation rate linearly decreases at every search step and ends when the mutation rate is equal to the lower bound mutation rate. Further, the method computes at least one of the second performance indicator value of each new individual element and the hardware accelerated layers of each DNN model. The new individual element is updated into the population batch and removing the least fit individual element from the population batch.

Table 2 - Optimal pruning search technique

| M: model to prune, POP_SIZE: Maximum size of a population, CYCLES: Number of steps to perform the search, Prune: model using layer-wise distribution of $\Delta$, Accelerate: A method to accelerate a model for the $ith$ processing element using its SDK, NPE: number of processing elements, $\alpha$: Lower bound of mut_rate, fittest: A method that selects the fittest individual from a population using the cost function defined in Equation 4, |
| --- |

remove_least_fit: A method that removes the least fit individual from a population using the cost function defined in Equation 4.

Output: generates a plurality of pruned and accelerated models for each processing element i: with the same accuracy as the base model.

```
 // Initialize all the prerequisites}
bounds ← {1 - A_{base}, 1 - Sp_{target}}; // M's error and a target network density
// Generate population of random pruning configurations (configs)
POPULATION ← {φ φ };
for 1 to POP_SIZE do
random_config ← Layer-wise random Δ;
M' ← Prune(M, random_config);
        for i = 1,2, ..., N_{PE} do
        M'_{hwi} ← Accelerate_i(M');
        A^i_{prune} ← Accuracy of M'_{hwi};
end
A_{prune} ← Store min A^i_{prune} as the accuracy for random_config;
        POPULATION.append((random_config, A_{prune}, Sp_{prune}));
end
 // Search begins here
mut_rate ← 1.0;  // Mutation rate starts from 1.0 and decreases linearly.
for 1 to CYCLES do
parent ← fittest(POPULATION);
child ← mutate(parent, mut_rate);
M' ← prune(M, child);
        for i = 1,2, ..., N_{PE} do
        M'_{hw} ← Accelerate_i(M');
        A^i_{prune} ← Accuracy of M'_{hwi};
end
```

> $A_{prune}$ ← Store min $A^i_{prune}$ as the accuracy for random_config;
>
> POPULATION.append((random_config, $A_{prune}$, $Sp_{prune}$));
>
> remove_least_fit(POPULATION);
>
> mut_rate ← max($\alpha$, mut_rate - 1CYCLE1CYCLE);
>
> **end**
>
> best_config ← fittest(POPULATION);
>
> $M'$ ← prune(M, best_config);
>
> **for** $i = 1,2, ..., N_{PE}$ **do**
>
> M'$_{hw}$ ← Accelerate$_i$(M');
>
> **end**

The optimal pruning search technique uses a stochastic approach to solve complex problems, with simple initial conditions and rules. Such technique iteratively improves population of solutions, and often perform better than deterministic approaches. This search technique has been used to prune networks that finds the optimal layer-wise pruning ratio $\Delta$, resulting in higher sparsity, and the low latency models. However, these models often suffer from the accuracy drop, and require re-training to recover loss in the accuracy. The optimal pruning search technique enables to find optimal configurations such that the resultant model has the same accuracy as the base model. This reduces the overall search time, and the computational load. The base model can be defined as a set of operations denoted by $\mathcal{M} = \{l_1, l_2, \ldots, l_L\}$ with an operation $l_k$, where k $\in$ {1,2, ..., L}, can either be a convolution or max pooling or even an activation like ReLU or tanh. The pruned layers are trained with trainable parameters or weights W, represented by pruning the layer represented in Equation 1,

$$W_k' = prune(W_k | \Delta) \text{ --------- Equation 1}$$

Every trainable layer can be pruned using the Equation 1. The resultant model $\mathcal{M}$' will have an associated accuracy ($A_{prune}$) and overall network sparsity ($Sp_{prune}$) is represented by a tuple $\langle A_{prune}, Sp_{prune} \rangle$. The optimal pruning search technique uses these as a set of objectives to search to find the optimal combination of layer-wise $\Delta$ values for all layers. Such that it has high $Sp_{prune}$ and its $A_{prune}$ is the same as $A_{base}$.

In another embodiment, the pruning search model solves multi-objective optimization problem (MOOP). The multi-objective optimization problem MOOP is a class of problem which solves for a set of results in a space of solutions instead of a single solution. Given an arbitrary search space $X$, and a set of objective functions $\mathcal{F}$, the objective is to find a subset $X'$ which satisfies all the objectives given in the problem with best possibilities. This subset $X'$ is called the pareto-optimal set or the pareto-front and is mathematically described below. Considering x as any solution from the set $X$. The set of objectives as $\mathcal{F}^{(x)} = min\{f_0(x), f_1(x), \ldots, f_N(x)\}$ where N is the total number of objectives $f_i$ (i $\in$ 0,1,... N) represents a single objective. The solution $x_a$ is represented in Equation 2, $x_b$ is represented in Equation 2 and Equation 3, if,

$$\forall i \in \{0,1, \ldots, N\}, f_i(x_a) \leq f_i(x_b) \text{ ---------- Equation 2}$$

$$\exists j \in \{0,1, \ldots, N\}, f_i(x_a) < f_i(x_b) \text{ -------Equation 3}$$

In this case that $x_a > x_b$ (read as $x_a$ dominates $x_b$). There exists such a set $X'$ for which $x_a$ cannot dominate $x_b$. This improves the solution $x_a$ in one objective without degrading in the other objectives. This set $X'$ is then defined as the pareto-optimal set of solutions for which obtains the optimal values for the given objectives. To implement pareto-optimality, a single scalar can efficiently represent the value from each of the given objectives. The multi-objective cost function is represented in the Equation 4,

$$\mathcal{J} = \sum_{a=0}^{N} \lambda_a \, y_a \text{ -------- Equation 4}$$

Where, $y_a = \{1 - A_a, 1 - Sp_a\}$ and N is the total number of objectives. This generates a single scalar which is used to determine the fitness. To optimize the inverse of accuracy and sparsity of the network, the error rate and the network density are minimized using the Equation 4, where $\lambda$ is a weight vector initialized by the user.

The set of layer-wise pruning ratios $\Delta$ for each DNN model is the pruning configuration and to finding the optimal set of $\Delta$ can minimize the objectives. The method of the present disclosure first generates a random population batch of configurations and select the best-fit instance for further mutation. The optimal pruning search technique uses a cost function (Equation 5) to determine the fitness of each DNN model. Here, selection of the best fit individual element from the entire population is shown to be faster. The user selection process returns one individual configuration called the parent configuration, or simply the parent. The values of such configuration (like some $\Delta$s in its encoding) may require a random modification which is called as mutation. This results in a new individual element configuration that can produce a better global sparsity at an accuracy closer to the base model. Typically, mutation happens when a change in probability value falls below a threshold probability known as the mutation rate. Lower the mutation rate is the chance of mutation for any member of the configuration.

The dynamic mutation rate, where the probability threshold value changes linearly throughout the pruning search such as diversity in the population size. By linearly reducing the mutation rate, the amount of mutations that takes place for the fittest individual also reduces. The optimal pruning search technique along with the effect of each configuration on the accuracy and the sparsity of the pruned accelerated models for each processing elements (Table 2). The optimal pruning search technique defines the bound parameter serving as the upper bound to the model's error rate (1 - $A_{base}$) and the target density (1 - $Sp_{target}$) as represented in the below steps.

**Step 1:** In lines 4 to 10 of Table 2 the population size is created (of size POP_SIZE) for randomly generated configuration. Then, the configurations are recorded on the model $\mathcal{M}$ when accelerated with processing elements or processors and record the accuracy for each processing elements.

**Step 2:** The mutation rate mut_rate is set to the highest value with 1 in line 1. The probability threshold is in the range [0,1].

**Step 3:** With the initial population created, the search is performed from lines 14 to 23 of Table 2. The best fit individual from the population is selected and mutated.

**Step 4:** The mutation rate is decremented after every search step in line 25 of Table 2. The lower bound mutation rate by $\alpha$ to allow the continued mutation.

**Step 5:** After the search is completed, the fittest config is selected from the population in line 27 of Table 2.

This is the optimal combination of the pruning ratios corresponding to each layer. The bases model $\mathcal{M}$ is pruned with the pruning ratio, and accelerated further in lines 28-30, to generate the final set of transformed models for all the processing elements.

It may be noted here that during the creation of the new individual entity, both in the population creation phase and in the mutation phase. This involves pruning the model and corresponding acceleration for all the processing elements and storing the minimum accuracy ($A_{prune}$), and network sparsity ($S_{prune}$) for all the processing elements.

Referring now to the steps of the method 300, at step 306, the one or more hardware processors 104 identify an optimal layer associated with the pruned hardware accelerated DNN model based on the user option. From the above example by performing either with the user options for the optimal layers are identified from the pruned hardware accelerated DNN models.

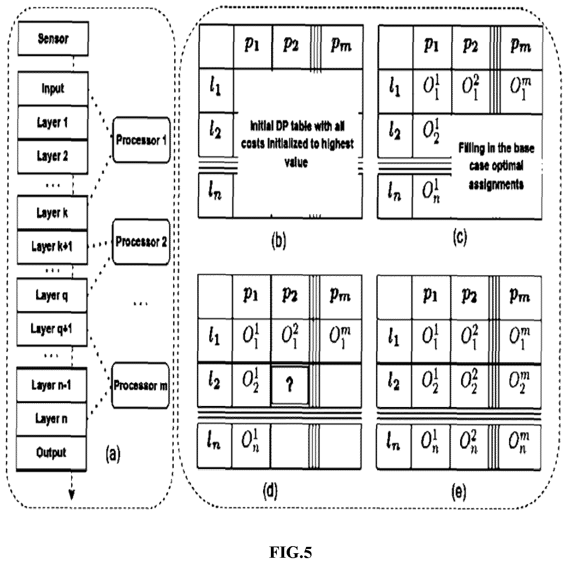

Referring now to the steps of the method 300, at step 308, the one or more hardware processors 104 create by using a layer assignment sequence technique a static load distributor by partitioning the optimal layer of the DNN model into a plurality of layer sequences and assigning each layer sequence to corresponding processing element of hardware accelerators. Referring now back to the example, dynamic programming problems are often solved using a tabular approach. Towards that, attempt to create a table similar (FIG. 5) with the optimal assignment costs in a bottom-up fashion.

The layer assignment sequence technique (referring to Table 3) obtains from a layer splitter, each layer of the DNN model associated with the pruned accelerated DNN model based on at least one user option. Further, a first column of a layer table is filled with cumulative execution latency of each layer on a first processor, and a first row of the layer table with the sum of the execution latency. The data transfer latency on the first layer is filled for all the participating processor(s).

Table 3 - Layer assignment sequence technique

| |
|---|
| **Data**:  List $L$ of execution latencies for each layer in each processor, Output tensor transfer latency $D$, Image transfer latency $I$ |
| **Result**:  An assignment array that contains the processor number corresponding to each layer in ascending order |
| **for** $l = 1, 2, ..., N$ **do** |
|     **for** $p = 2, ..., M$ **do** |
|     $O[l][p] \leftarrow 0$; |
|     **end** |
| **end** |
| **for** $l = 1, 2, ..., N$ **do** |
| $O[l][1] \leftarrow \sum_{i=i}^{l} L[l][1] \sum_{i=i}^{l} L11$; |
| **end** |
| **for** $p = 1, 2, ..., M$ **do** |
| $O[1][p] \leftarrow L[1][p] + I$; |
| **end** |
| **for** $l = 2, ..., N$ **do** |
|     **for** $p = 2, ..., M$ **do** |
|         $O[l][p] \leftarrow \infty \infty$ ; |
|         **for** $i = 1, 2, ..., l\text{-}1$ **do** |
| cost $\leftarrow \max(O[i][p-1], \sum_{t=i+1}^{l} L[t][p] + D[j] \sum_{t=i+1}^{l} Ltp + Dj)$; |

```
if cost ≤ O[l][p] then
        O[l][p] ←cost;
            end
        end
    end
end
for l = 1, 2, ..., N do
schedule[l] ←argminₚ O[l]\;
end
```

Then, a schedule of each processor is obtained in a recursive bottom-up manner for filling up the complete layer table. Further, a schedule array index is created for all the layers to obtain the optimal schedule of each layer. The schedule array index is indexed and each processor is assigned with a number to the array location corresponding to the indexing. The layer table is re-traced to obtain the optimal schedule of each layer.

To incrementally fill up the layer table, the following steps are performed (Table 3),

**Step 1:** Obtain the individual layers and profiling information from the layer splitter.
**Step 2:** Start filling the first column, corresponding to the cumulative execution latencies of the all the layers on the first processor, and the first row corresponding to the sum of execution latency and the data transfer latency the first layer, on all the participating processors (FIG.2).
**Step 3:** Based on the Equation (5) obtain the schedule for each processor in the recursive, bottom-up manner as and finally filling up the complete layer table.
**Step 4:** The layer table is re-traced to obtain the optimal schedule of each layer. Specifically, creating the schedule array indexing by layers, and assigning the processor number to the array location corresponding to the index of the layer. An example of such a schedule output is as follows: [0,0,0,0,1,1,1,1,1,1,1], where the first four layers are assigned to the first processor and the next seven layers are assigned to consecutive processor(s).

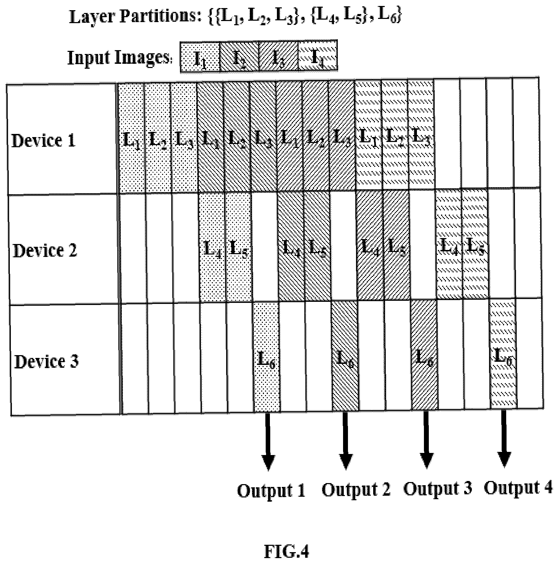

FIG.4 depicts partitioning of the layers of the DNN model and assigning each layer to each hardware processors using the systems of FIG.1 and FIG.2, in accordance with some embodiments of the present disclosure. In this embodiment, a set of optimal configurations are determined in each layer of the DNN model, for each of the processor(s) or processing elements of the heterogeneous computing system. Partitioning these layer sequences into sub-sequences. Further, assigning individual processing elements, such that the DNN inference workload is balanced. To achieve a static partitioning of each DNN model is designed during the deployment on the heterogeneous platform including of edge devices, and accelerators.

The layers in each DNN model are essentially sequential. Layer partitioning with proper distribution of the subset of layers on multiple devices have a effect on overall average latency of the inference tasks by minimizing the make-span of each task. This improves overall resource utilization and common vision application in embedded IoT. In such scenarios, minimizing the latency impacts overall throughput is essential in the embedded domain. The capability of underlying processing elements and the bandwidth of the bridge between the host and the accelerators determines the optimal partitioning of the DNN model into the sub-sequences of layers. For instance, the bandwidth between the host processor(s) cores are in the order of gigabits per second, whereas the bandwidth between the host and a universal serial bus can be a thousand times less.

Referring to an example, depicting the effects of pipelined parallelism by partitioning the model layers and assigning them to different devices using an image identification application. In this example, it has been assumed that each DNN model consisted of layers such as $\{L_1, L_2, ..., L_6\}$ which are partitioned into three subsets, namely $\{\{L_1, L_2, L_3\}, \{L_4, L_5\}, L_6\}$. Each subset is assigned to one of the three available devices depending on the device parameters, and the pipelined parallelism leads to reduction in the inference latency.

A brute force approach can achieve all possible subsequence combinations on all possible processing elements in the heterogeneous computing platform. Capacity based partitioning approach can be employed by assigning the largest possible sub-sequence of layers to the current processing element, considering one processing element at a time. However, this greedy approach does not necessarily assign balanced layers to the host and the accelerator(s). Workload distribution and scheduling of each DNN model execution graphs are necessary to optimize each DNN model for the target platform. Specifically, in a Dynamic Programming (DP) approach partitioning provides the optimal assignment and the optimization space is relatively smaller.

The DP based formulation is best for latency improvement for both parallel and pipeline cases. The system 100 has been evaluated with virtual machines with server grade CPU and 64GB RAM, emulating IoT devices. Further, deploying large DNN model on the edge node by partitioning the model graph based on the capacities of the computing hierarchy is complex. The DP formulation considers the performance benefit which improves fused-layer partitioning for minimizing the total execution time for single inference.

FIG.5 depicts the layer sequences of the DNN model distributed to each hardware processors using the systems of FIG. 1 and FIG.2, in accordance with some embodiments of the present disclosure. Referring with an example, the plurality of processors M or processing elements (PE) connected over a bus, where $p_k \in P$. Let $\mathcal{N}$ be the deep learning model graph and L = $\{l_0, l_1, ..., l_n\}$ be a set of N layers. Let $T_{h,j}^k$ be the computation latency for processing the sub-sequence of layers h through j in the processing element k and $D_j$ be the data transfer latency for sending the output tensor from layer j to processing element k + 1. The computational latency is derived for the best configuration selected which automatically creates the static partition graph of N layers of each DNN model into M sub-sequences and assigning each partition to a processing element in P as shown in FIG.5.

When the sub-sequence of layers ($l_1$, ...,$l_j$) are assigned to a single processor, such assignment were given as

$$O_j^1 = T_{1,j}^1$$

depicting the cost matrix for solving dynamic programming with the rows, columns and cells representing layers, processing elements and optimal assignments. This assignment is equivalent to filling up the first column of the layer table with the layer latency $\mathcal{N}$ .

In the recursive step, the assignment of each layer ($l_1$, ...,$l_j$) on the processing element(s) ($p_1$, ..., $p_k$) requires optimal assignment of layers ($l_1$, ..., $l_{i-1}$) on ($p_1$, ..., $p_{k-1}$) and the assignment of ($l_i$, ..., $l_j$) on $p_k$ is represented in Equation 5,

$$O_j^k = \min_{i=1,2,...,j-1} \max\left(O_{i-1}^{k-1}, T_{i,j}^k + D_j\right) \text{ ---------------- Equation 5}$$

FIG.6 depicts an example residual network (ResNet) architecture variant to evaluate the layers of the DNN model pruned using at least user option using the systems of FIG. 1 and FIG.2, in accordance with some embodiments of the present disclosure. The above discussed search techniques were experimented and evaluated using an Intel Xeon machine with 32 cores, 32 GB RAM and two NVIDIA Quadro P1000 GPU cards, as the host system. The NVIDIA JetSon Nano as the embedded host for edge platform and a Coral TPU as the deep learning accelerator. The experiments on the deep learning image classification models with CIFAR-10 and ImageNet are the input image data. It is noted that pruning experiments are performed with the standard DNN model such as the VGG, the ResNet, a GoogleNet and the DenseNet. Table 4 represents the efficiency of the hardware pruning search technique for finding sparse low latency models. Although these models were highly overparameterized, for a relatively less complex dataset like CIFAR-10. Also, the global sparsity and latency reduction factors of standard models trained on CIFAR-10.

Table 4 - Global sparsity and latency reduction factors of standard models trained on CIFAR-10

| DNN Model Name | # Of layers | Comparisons | Global Sparsity | Latency Reduction Factor |
|---|---|---|---|---|
| VGG 16 | 16 | 15 | 83.28% | 2.33× |
| VGG 19 | 19 | 15 | 80.63% | 2.3× |
| Resnet 18 | 21 | 14 | 79.38% | 2.56× |
| Resnet 34 | 37 | 9 | 80.99% | 2.52× |
| Resnet 50 | 53 | 14 | 61.29% | 2.27× |
| GoogLeNet | 56 | 9 | 90% | 2.18× |
| DenseNet 161 | 161 | 9 | 90% | 2.17× |

FIG.7 depicts a graph of the DNN model layers versus network sparsity pruned using a first pruning search user option executed by using a hardware pruning search technique using the systems of FIG. 1 and FIG.2, in accordance with some embodiments of the present disclosure. Referring now to the hardware pruning search technique experimental evaluation, the layer-wise pruning ratio distribution is achieved in ResNet 18 architecture. It is noted that the hardware pruning search technique choose higher pruning ratios for the deeper layers, and lower pruning ratios for the earlier layers. This is because the deeper layers in the DNN model memorize the data distributions and during training serves to increase the accuracy of the model on the training data. However, in the previous layers the DNN model tend to learn generalized distribution of the data. Deeper layers have been pruned aggressively as their contribution to the final output is relatively smaller, compared to the previous layers. As depicted in FIG.7, the last layer is fully connected and is not pruned at all. This signifies that all the connections in the final layer accurately classify the final feature.

Experimental evaluation of the hardware pruning search technique, the pruning resolution, the upper bound to the pruning ratio search space were set to 0.99. Initially, the pruning ratio are updated and set to 0.2 and 0.1 respectively and continues searching until the pruning ratio exceeds the pruning resolution or drops below a defined precision limit. It is identified that $10^{-3}$ is enough to search the optimal pruning ratios, for such fine-grained search. Table 5 compares overall sparsity for the ResNet 50 architecture using random exhaustive search and the hardware pruning search technique.

Table 5 - Overall sparsity comparison for ResNet 50 using random exhaustive search and the hardware pruning search technique

| DNN Model | Method | Sparsity |
|---|---|---|
| ResNet 50 | Random exhaustive search | 70.09% |
| | Hardware pruning search technique | 61.29% |

The randomly generated pruning ratio for each layer of the ResNet 50 architecture provides higher global sparsity than the hardware pruning search technique. This delivers for each model the set of pruning ratios per layer, such that the global sparsity of each DNN model can be maximized without accuracy drop.

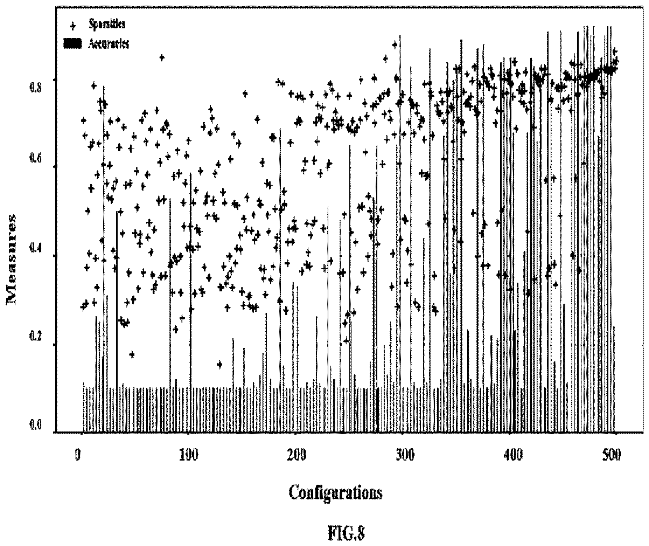

FIG.8 depicts a graph of the DNN model layers searching for a fittest individual element from a population batch by using an optimal layer pruning search technique using the systems of FIG.1 and FIG.2, in accordance with some embodiments of the present disclosure. To identify the top individual element and the removal of the least individual element from the population batch ensures better and better models after every evolution. It was experimented with known in the art model Aging Evolution (AE), but it performed poorly and took much longer time to identify individual element where the accuracy of the DNN models were preserved. The sparsity of these models was poor as well. The reason for this is as follows: in AE, if there are no good configs for a continued period, even the fittest one can get discarded from the population, when it gets too old.

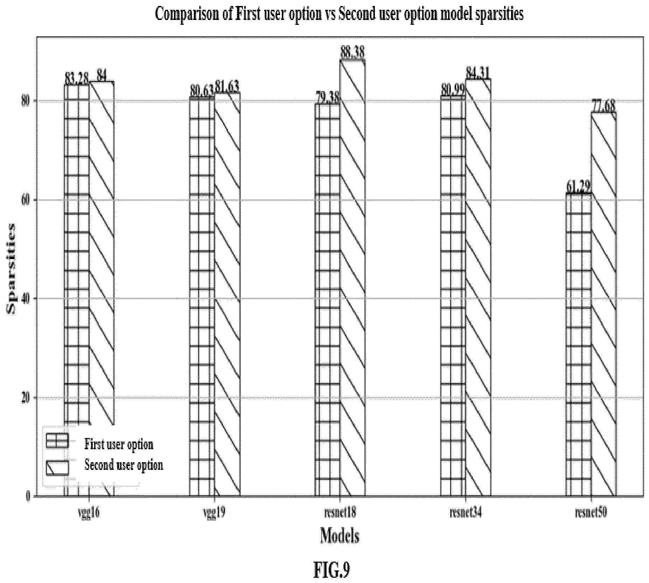

FIG.9 depicts the sparsity differences among the models pruned with the hardware pruning search technique and the optimal pruning search technique using the systems of FIG. 1 and FIG.2, in accordance with some embodiments of the present disclosure. It is evident from the experimental results that the optimal pruning search technique takes much longer to find the best possible layer-wise pruning ratios for the best possible overall sparsity achievable by the network without the need for fine-tuning it. However, it is observed that the optimal pruning search technique and the hardware pruning search technique serve different needs. The hardware pruning search technique finds sparse models fast, whereas the optimal pruning search technique maximizes sparsity for any given network at the cost of search time. In an industrial setting, hardware pruning search technique is often suitable for doing a fast prototyping and demonstration of DNN model reduction for embedded systems.

Table 6 shows comparison of both the search techniques with the state-of-the-art automated pruning system AMC. AMC is an AutoML method that uses reinforcement learning to learn the optimal distribution of the pruning ratios per layer for pruning the DNN model. AMC searches in two modes: accuracy guaranteed, which prunes the network by maintaining its accuracy, and FLOPs constrained compression which trades for reduced FLOPs at the cost of inference accuracy. As reported in Table 6, the optimal pruning search technique finds better individual element at the cost of a slightly larger search time than AMC.

Table 6- Comparison of state-of-the-art pruning method with the hardware pruning search technique. ResNet 50 trained on the CIFAR-10 dataset

| Model | Method | Model sparsity | Latency reduction factor | Time taken (Hours) | Fine-tuned |
|---|---|---|---|---|---|
| ResNet | Not pruned | 0% | 1x | - | - |
| | First pruning option | 61.29% | 2.27x | 0.04 | No |
| | AMC (state of the art) | 64.71% | 2.91x | 10.73 | No |
| | Second pruning search | 77.68% | 3.12x | 15.56 | No |

The hardware pruning search technique achieves the least sparsity improvement among the three algorithms, albeit taking much less time to search. For all the methods, the accuracy of the pruned model remains the same.

In one existing method iteratively pruning and quantizing the network and validate its performance on a target hardware using approximations. However, during the quantization phase, fine-tuning the network recovers some accuracy points. Instead of using approximate computing to validate how a pruned network may perform on a target hardware, deployment and testing during search using the optimization defined by each processor. The optimal pruning search technique generates two different pruned and accelerated models for the host system (NVIDIA JetSon Nano) and the USB connected DNN accelerator (Coral TPU). The network used here is ResNet-34 trained on the CIFAR-10 dataset. Table 7. shows the effect of using the optimal pruning search technique and generating two different pruned and accelerated models for the host board (JetSon Nano) and the USB accelerator (Coral TPU). The DNN ResNet-34, trained on the CIFAR-10 dataset for this experiment.

Table 7 - Effect of using the optimal pruning search technique and generating two different pruned and accelerated models

| Platform | Latency Value in milliseconds | | | | | | Model Accuracy |
|---|---|---|---|---|---|---|---|
| | conv1 | layer1 | Layer2 | Layer3 | Layer4 | Total | |
| Optimal pruning search transformed model for JetSon Nano | 5.93 | 13.63 | 171.26 | 91.44 | 406.30 | 688.56 | 91% |
| Optimal pruning search transformed model for Coral TPU | 3.71 | 10.2 | 91.97 | 48.77 | 144.33 | 298.98 | 91% |

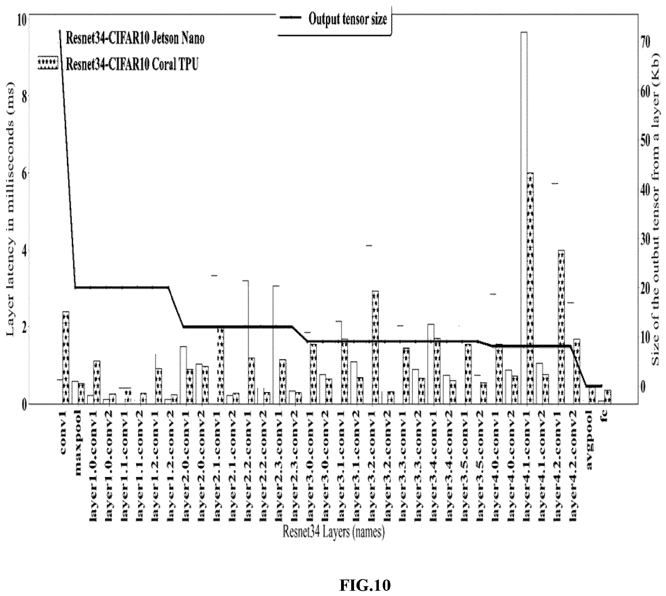

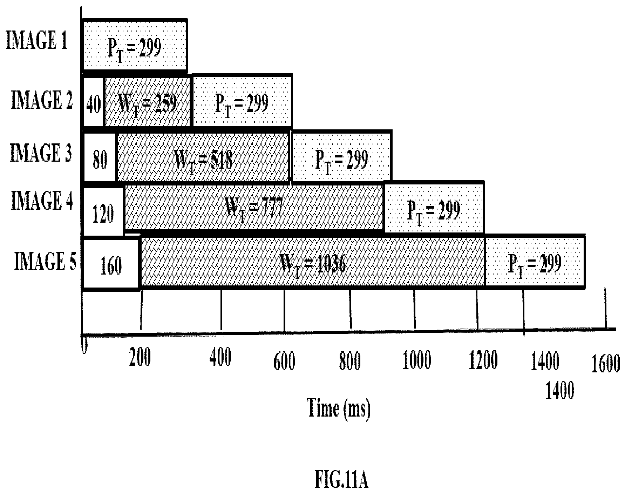

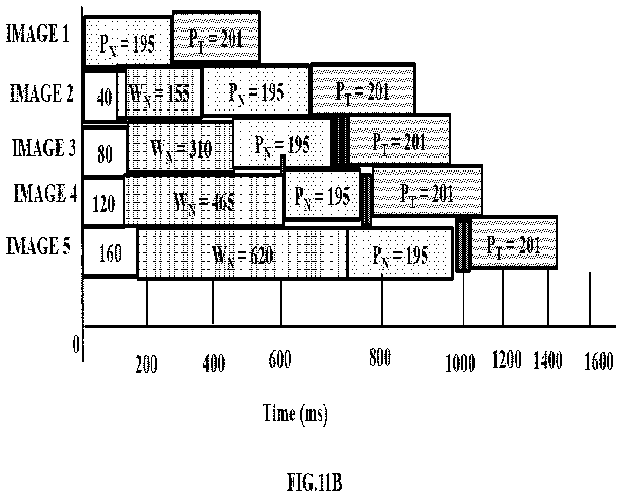

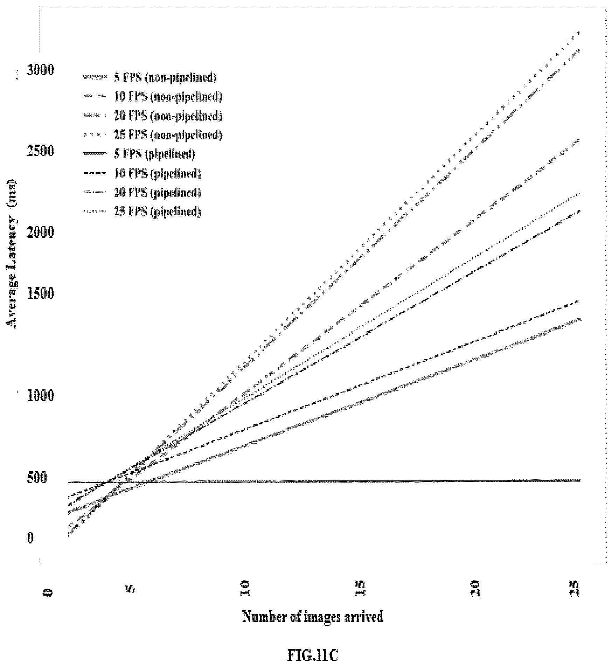

FIG.10 depicts a graph representing an optimal computational latency of each layer of the DNN model of the ResNet 34 architecture trained on a computer-vision dataset used for object recognition (CIFAR) 10 datasets, using the systems of FIG.1 and FIG.2, in accordance with some embodiments of the present disclosure. After these optimal pruning ratios are identified, the inference workload balance these pruning ratios, uses the bandwidth information between the host and the accelerator system using the layer assignment sequence technique. Further, generating an optimal scheduling of the subsequences of layers between the available processing elements. The optimal computation latency of each layer of the network used shows the layer latencies of both Jetson Nano and the accelerator TPU side by side bars. The output tensor size of each layer is marked in the FIG.11. These parameters are used to find the optimal assignment of layers to devices in line 17. For this model, the optimal schedule is the assignment of first 16 layers on Jetson Nano and then layers 17 to 35 on the TPU. The optimal execution time, 293 ms is between that of TPU (194 ms) and Nano (722 ms). This optimal execution time includes the transfer overload of the output tensor after layer 16 and ensures that the pipeline efficiency is high during continuous inference through the model.

Sample schedule resembles [0,0,1,1,1,1, ...,1], denoting that the first two layers execute on Nano and all subsequent layers are assigned to the TPU. Table 8 presents the detailed results of applying the layer assignment sequence technique on the ResNet34 trained on the CIFAR-10 data and the two other models trained on ImageNet.

Table 8 - Optimal inference scheduling between Jetson Nano & Coral TPU

| Model | Dataset | Partition point | Latency values (ms) | | |
|---|---|---|---|---|---|
| | | | Pipeline | Jetson Nano (N) | TPU (T) |
| ResNet34 | CIFAR-10 | 16 | 195 (N) + 201 (T) | 689 | 299 |
| ResNet18 | ImageNet | 7 | 206 (N) + 207 (T) | 636 | 274 |
| ResNext | ImageNet | 10 | 204 (N) + 204 (T) | 588 | 285 |

FIG.11A depicts an execution time graph on a coral tensor processing unit (TPU) incoming image wait time to complete the process of a previous image, using the systems of FIG.1 and FIG.2, in accordance with some embodiments of the present disclosure. The realization of pipelined parallelism by partitioning the model and assignment of subsets of layers into multiple devices can be seen in the layer execution time graphs. Experimented on the set of images appearing at various frame rates. In this example, the frame rate is 25 fps, where each image appears at an interval of 40 ms.

FIG.11B depicts creates the layer partitioning of the DNN model at layer 16 of the ResNet 34 architecture model executed on the coral TPU processor by using a layer partitioning technique using the systems of FIG.1 and FIG.2, in accordance with some embodiments of the present disclosure. FIG.11B creates the partition point at layer 16 of a ResNet-34 model such that layers 1 to 15 are executed on a Jetson Nano, and layers 16 to 35 are executed on the Coral TPU. It can be seen from Table 8, the average processing time for the entire model on the Jetson Nano is 688ms, and that on the TPU is 299ms, but our algorithm creates the partition point in a manner such that the average execution time of the layer subset is optimal for each device (195ms to execute layers 1 to 15 on Jetson Nano, and 201 ms to execute layers 16-35 on TPU). Hence, in the partitioned execution mode, the waiting time for each image reduces considerably, and the optimal latency is achieved from the fourth image onwards.

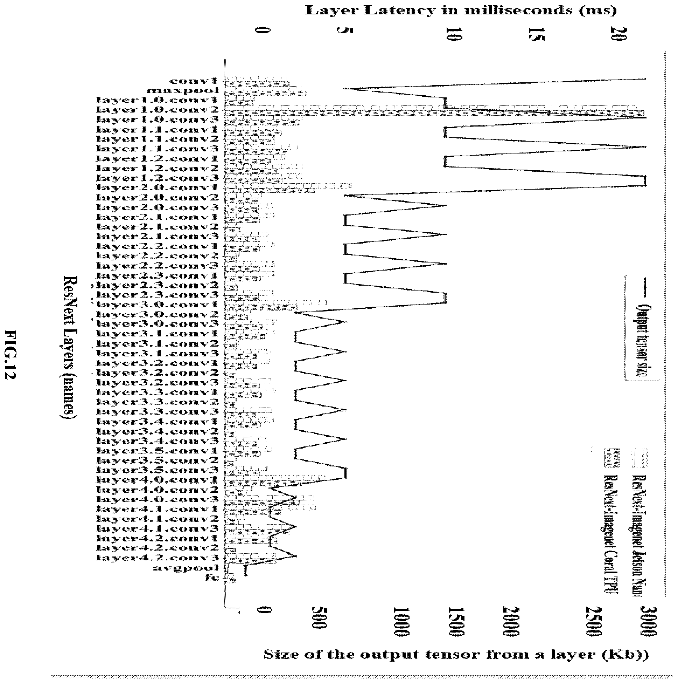

FIG.11C depicts a graph of incoming image parallelly pipelined and processed by using the layer partitioning technique with plotted latency graph using the systems of FIG. 1 and FIG.2, in accordance with some embodiments of the present disclosure. Experimental analysis performed by varying the input image rate demonstrates the partitioning technique and the plotted latency graphs are shown in FIG.12C. Further, the method demonstrates that the pipelined parallelism in partitioning achieves lower latency by executing partition graphs in parallel and minimizes the waiting time for the previous process to complete.

FIG.12 depicts a graph of the computational latency of the ResNet18 architecture trained on an Image Net dataset with processor types and outputting tensor size for each layer performed by using the layer assignment sequence technique using the systems of FIG. 1 and FIG.2, in accordance with some embodiments of the present disclosure. FIG.12 shows the accuracy-latency trade-off parameters for ResNet18 architecture trained on the ImageNet dataset. These results are obtained by considering a 200-millisecond setup time and 600 Mbps data transfer rate of Coral TPU, obtained through our experiments. The computation latency of the ResNet 18 architecture trained on the ImageNet dataset, on the two types of processing elements & the output tensor size for each layer. These parameters are the inputs to the layer assignment sequence technique.

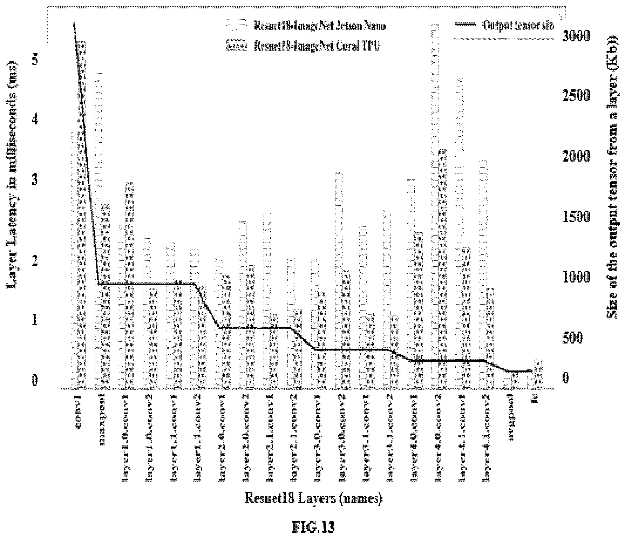

FIG.13 depicts a graph of the computational latency of aggregated residual transformation (ResNext) architecture trained on the Image Net dataset with processor types and outputting tensor size for each layer performed by using the layer assignment sequence technique using the systems of FIG. 1 and FIG.2, in accordance with some embodiments of the present disclosure. FIG.13 shows the accuracy-latency trade-off parameters & ResNext architectures trained on the ImageNet dataset on the two types of processing elements & the output tensor size for each layer. These parameters are the inputs to the layer assignment sequence technique.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of pruning deep neural network (DNN). The embodiment, thus provides method and system for jointly pruning and hardware acceleration of pre-trained deep learning models. Moreover, the embodiments herein further provides a unified approach for pruning the DNN model layers with zero loss in accuracy drop due to hardware acceleration. This is achieved for pruning the deep learning model using the most optimal pruning ratios with no loss in accuracy. The method of the present disclosure has two different pruning techniques with iterative refinement strategy for pruning considering the subsequent hardware acceleration on the DNN accelerators. The method generates the transformed and accelerated DNN models for all the computing elements and maps the DNN model layers to the set of computing elements with heterogeneous capacity.

The method has higher efficacy of such partitioning and inference workload mapping on an actual embedded host and a DNN accelerator.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for jointly pruning and hardware acceleration of pre-trained deep learning models, the method comprising:

   receiving (302) from a user via one or more hardware processor, a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search;
   transforming (304), the plurality of DNN models and the plurality of hardware accelerators, via the one or more hardware processors, into a plurality of pruned hardware accelerated DNN models based on at least one of the user options,

      wherein the first pruning search option executes a hardware pruning search technique, to perform search on each DNN model and each processor based on at least one of a performance indicator and an optimal pruning ratio, and

wherein the second pruning search option executes an optimal pruning search technique, to perform search on each layer with corresponding pruning ratio;

identifying (306) via the one or more hardware processors, an optimal layer associated with the pruned hardware accelerated DNN model based on the user option; and

creating (308) by using a layer assignment sequence technique, via the one or more hardware processors, a static load distributor by partitioning the optimal layer of the DNN model into a plurality of layer sequences and assigning each layer sequence to corresponding processing element of hardware accelerators.

2.  The processor implemented method as claimed in claim 1, wherein transforming the plurality of DNN models and the plurality of hardware accelerators into a pruned hardware accelerated DNN model by executing the hardware pruning search technique comprises:

    initializing (i) each DNN model, (ii) a maximum pruning ratio with an upper bound value, (iii) an initial pruning ratio, (iv) a step size updated with a set of entities, (v) a global pruning library, (vi) at least one of accelerating elements, (vii) a number of processing elements, (viii) a maximum resolution, and (ix) a plurality of first performance indicators comprising of a accuracy, an inference, a latency, a model size, and an energy of the hardware accelerated DNN models;

    computing at least one of the first performance indicator value by pruning the pruning ratio, and the hardware accelerated DNN model;

    updating a revised pruning ratio based on change observed on at least one of the first performance indicator value matching with corresponding target performance indicator value; and

    recording the revised pruning ratio when at least one of the first performance indicator value is nearest to the target performance indicator value and modifying the step size.

3.  The processor implemented method as claimed in claim 1, wherein transforming the plurality of DNN models and the plurality of hardware accelerators into a pruned hardware accelerated DNN model by executing the optimal pruning search technique comprises:

    initializing (i) each DNN model, (ii) a maximum population size, (iii) a mutation rate with highest predefined probability threshold value, (iv) a layer-wise pruning ratios, (v) a plurality of second performance indicators comprising of an accuracy, and a network sparsity, (vi) the one or more accelerating elements, (vii) a lower bound mutation rate, and (viii) a fitness score function;

    iteratively executing reaching the maximum population size,

    creating an individual element for each layer based on the pruning ratio associated with each layer of the DNN model, wherein the pruning ratio for each layer is randomly generated, and

    computing at least one of the second performance indicator value of the individual element and the hardware accelerated DNN model, and recording each individual entity with corresponding pruning ratios into a population batch;

    iteratively performing to search the optimal layer wise hardware accelerated DNN model by,

    selecting a fittest individual element from the population batch using the fitness score function,

    creating a new individual element by randomly selecting the layers of the DNN model, and changing randomly the pruning ratios associated with each layer based on the mutation rate, wherein the mutation rate decrements linearly at every search step and ends when the mutation rate is equal to the lower bound mutation rate;

    computing at least one of the second performance indicator value of each new individual element and the hardware accelerated layers of the DNN model; and

    updating the new individual element into the population batch and removing the least fit individual element from the population batch.

4.  The processor implemented method as claimed in claim 1, wherein creating the static load distributor by partitioning the optimal layer of the DNN model into a plurality of layer sequences and assigning each layer sequence to corresponding processing element of hardware accelerators by using the layer assignment sequence technique comprises:

obtaining from a layer splitter each layer of the DNN model associated with the pruned accelerated DNN model based on at least one of the user option;

filling

a first column of each layer table with cumulative execution latency of each layer on a first processor, and a first row of each layer with sum of the execution latency, and

a data transfer latency on the first layer of all the participating processor;

obtaining a schedule of each processor in a recursive bottom-up manner for filling up the complete layer table;

creating a schedule array indexed by all the layers to obtain an optimal schedule of each layer and indexing all the layers; and

assigning each processor with a number to an array location corresponding to the indexing, wherein the table is re-traced to obtain the optimal schedule of each layer.

5. A system (100), for jointly pruning and hardware acceleration of pre-trained deep learning models comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive from a user a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search;

transform the plurality of DNN models and the plurality of hardware accelerators, into a plurality of pruned hardware accelerated DNN models based on at least one of the user options, wherein,

the first pruning search option executes a hardware pruning search technique, to perform search on each DNN model and each processor based on at least one of a performance indicator and an optimal pruning ratio, and

the second pruning search option executes an optimal pruning search technique, to perform search on each layer with corresponding pruning ratio;

identify an optimal layer associated with the pruned hardware accelerated DNN model based on the user option; and

create by using a layer assignment sequence technique, a static load distributor by partitioning the optimal layer of the DNN model into a plurality of layer sequences and assigning each layer sequence to corresponding processing element of hardware accelerators.

6. The system as claimed in claim 5, wherein transforming the plurality of DNN models and the plurality of hardware accelerators into a pruned hardware accelerated DNN model by executing the hardware pruning search technique comprises:

initializing (i) each DNN model, (ii) a maximum pruning ratio with an upper bound value, (iii) an initial pruning ratio, (iv) a step size updated with a set of entities, (v) a global pruning library, (vi) at least one of accelerating elements, (vii) a number of processing elements, (viii) a maximum resolution, and (ix) a plurality of first performance indicators comprising of a accuracy, an inference, a latency, a model size, and an energy of the hardware accelerated DNN models;

computing at least one of the first performance indicator value by pruning the pruning ratio, and the hardware accelerated DNN model;

updating a revised pruning ratio based on change observed on at least one of the first performance indicator value matching with corresponding target performance indicator value; and

recording the revised pruning ratio when at least one of the first performance indicator value is nearest to the target performance indicator value and modifying the step size.

7. The system as claimed in claim 5, wherein transforming the plurality of DNN models and the plurality of hardware accelerators into a pruned hardware accelerated DNN model by executing the optimal pruning search technique comprises:

> initializing (i) each DNN model, (ii) a maximum population size, (iii) a mutation rate with highest predefined probability threshold value, (iv) a layer-wise pruning ratios, (v) a plurality of second performance indicators comprising of an accuracy, and a network sparsity, (vi) the one or more accelerating elements, (vii) a lower bound mutation rate, and (viii) a fitness score function;
> iteratively executing reaching the maximum population size,

>> creating, an individual element for each layer based on the pruning ratio associated with each layer of the DNN model, wherein the pruning ratio for each layer is randomly generated, and
>> computing at least one of the second performance indicator value of the individual element and the hardware accelerated DNN model, and recording each individual entity with corresponding pruning ratios into a population batch;

> iteratively performing to search the optimal layer wise hardware accelerated DNN model by,

>> selecting a fittest individual element from the population batch using the fitness score function,
>> creating a new individual element by randomly selecting the layers of the DNN model, and changing randomly the pruning ratios associated with each layer based on the mutation rate, wherein the mutation rate decrements linearly at every search step and ends when the mutation rate is equal to the lower bound mutation rate;
>> computing at least one of the second performance indicator value of each new individual element and the hardware accelerated layers of the DNN model; and
>> updating the new individual element into the population batch and removing the least fit individual element from the population batch.

8. The system as claimed in claim 5, wherein creating the static load distributor by partitioning the optimal layer of the DNN model into a plurality of layer sequences and assigning each layer sequence to corresponding processing element of hardware accelerators by using the layer assignment sequence technique comprises:

> obtaining from a layer splitter, each layer of the DNN model associated with the pruned accelerated DNN model based on at least one of the user option;
> filling

>> a first column of each layer table with cumulative execution latency of each layer on a first processor, and
>> a first row of each layer with sum of the execution latency, and
>> a data transfer latency on the first layer of all the participating processor;

> obtaining a schedule of each processor in a recursive bottom-up manner for filling up the complete layer table;
> creating a schedule array indexed by all the layers to obtain an optimal schedule of each layer and indexing all the layers; and
> assigning each processor with a number to an array location corresponding to the indexing, wherein the table is re-traced to obtain the optimal schedule of each layer.

9. One or more non-transitory machine-readable information storage mediums comprising one or more instructions which when executed by one or more hardware processors cause:

> receiving from a user via one or more hardware processor, a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search;
> transforming the plurality of DNN models and the plurality of hardware accelerators, via the one or more hardware processors, into a plurality of pruned hardware accelerated DNN models based on at least one of the user options,

>> wherein the first pruning search option executes a hardware pruning search technique, to perform search on each DNN model and each processor based on at least one of a performance indicator and an optimal pruning ratio, and

wherein the second pruning search option executes an optimal pruning search technique, to perform search on each layer with corresponding pruning ratio;

identifying via the one or more hardware processors, an optimal layer associated with the pruned hardware accelerated DNN model based on the user option; and

creating by using a layer assignment sequence technique, via the one or more hardware processors, a static load distributor by partitioning the optimal layer of the DNN model into a plurality of layer sequences and assigning each layer sequence to corresponding processing element of hardware accelerators.

10. The one or more non-transitory machine-readable information storage mediums of claim 9, wherein transforming the plurality of DNN models and the plurality of hardware accelerators into a pruned hardware accelerated DNN model by executing the hardware pruning search technique comprises:

initializing (i) each DNN model, (ii) a maximum pruning ratio with an upper bound value, (iii) an initial pruning ratio, (iv) a step size updated with a set of entities, (v) a global pruning library, (vi) at least one of accelerating elements, (vii) a number of processing elements, (viii) a maximum resolution, and (ix) a plurality of first performance indicators comprising of a accuracy, an inference, a latency, a model size, and an energy of the hardware accelerated DNN models;

computing at least one of the first performance indicator value by pruning the pruning ratio, and the hardware accelerated DNN model;

updating a revised pruning ratio based on change observed on at least one of the first performance indicator value matching with corresponding target performance indicator value; and

recording the revised pruning ratio when at least one of the first performance indicator value is nearest to the target performance indicator value and modifying the step size.

11. The one or more non-transitory machine-readable information storage mediums of claim 9, wherein transforming the plurality of DNN models and the plurality of hardware accelerators into a pruned hardware accelerated DNN model by executing the optimal pruning search technique comprises:

initializing (i) each DNN model, (ii) a maximum population size, (iii) a mutation rate with highest predefined probability threshold value, (iv) a layer-wise pruning ratios, (v) a plurality of second performance indicators comprising of an accuracy, and a network sparsity, (vi) the one or more accelerating elements, (vii) a lower bound mutation rate, and (viii) a fitness score function;

iteratively executing reaching the maximum population size,

creating, an individual element for each layer based on the pruning ratio associated with each layer of the DNN model, wherein the pruning ratio for each layer is randomly generated, and

computing, at least one of the second performance indicator value of the individual element and the hardware accelerated DNN model, and recording each individual entity with corresponding pruning ratios into a population batch;

iteratively performing to search the optimal layer wise hardware accelerated DNN model by,

selecting a fittest individual element from the population batch using the fitness score function,

creating a new individual element by randomly selecting the layers of the DNN model, and changing randomly the pruning ratios associated with each layer based on the mutation rate, wherein the mutation rate decrements linearly at every search step and ends when the mutation rate is equal to the lower bound mutation rate;

computing at least one of the second performance indicator value of each new individual element and the hardware accelerated layers of the DNN model; and

updating the new individual element into the population batch and removing the least fit individual element from the population batch.

12. The one or more non-transitory machine-readable information storage mediums of claim 9, wherein creating the static load distributor by partitioning the optimal layer of the DNN model into a plurality of layer sequences and assigning each layer sequence to corresponding processing element of hardware accelerators by using the layer assignment sequence technique comprises:

obtaining from a layer splitter each layer of the DNN model associated with the pruned accelerated DNN model based on at least one of the user option;
filling

a first column of each layer table with cumulative execution latency of each layer on a first processor, and
a first row of each layer with sum of the execution latency, and
a data transfer latency on the first layer of all the participating processor;

obtaining a schedule of each processor in a recursive bottom-up manner for filling up the complete layer table;
creating a schedule array indexed by all the layers to obtain an optimal schedule of each layer and indexing all the layers; and
assigning each processor with a number to an array location corresponding to the indexing, wherein the table is re-traced to obtain the optimal schedule of each layer.

System <u>100</u>

Hardware Processor(s) 104

I/O Interface(s) <u>106</u>

Memory <u>102</u>

Modules <u>108</u>

FIG. 1

**FIG. 2**

300

receive from a user a pruning request comprising of (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search

302

transform the plurality of DNN models and the plurality of hardware accelerators, into a plurality of pruned hardware accelerated DNN models based on atleast one of the user options

304

identify an optimal layer associated with the pruned hardware accelerated DNN model based on the user option

306

create by using a layer assignment sequence technique a static load distributor by partitioning the optimal layer of the DNN model into a plurality of layer sequences and assigning each layer sequence to corresponding processing element of hardware accelerators

308

FIG.3

Layer Partitions: {{L$_1$, L$_2$, L$_3$}, {L$_4$, L$_5$}, L$_6$}

Input Images: I$_1$ I$_2$ I$_3$ I$_4$

Output 1   Output 2   Output 3   Output 4

FIG.4

FIG.5

**FIG.6**

FIG.7

FIG.8

Comparison of First user option vs Second user option model sparsities

FIG.9

**FIG.10**

FIG.11A

FIG.11B

FIG.11C

**FIG.12**

FIG.13

Europäisches Patentamt
European Patent Office
Office européen des brevets

# EUROPEAN SEARCH REPORT

**Application Number**

EP 23 18 4761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/401891 A1 (XU XIAOFAN [IE] ET AL) 24 December 2020 (2020-12-24) * paragraph [0041] – paragraph [0108] * * figures 1-5 * ----- | 1-12 | INV. G06N3/0495 |

TECHNICAL FIELDS SEARCHED (IPC)

G06N

The present search report has been drawn up for all claims

| Place of search | Date of completion of the search | Examiner |
|---|---|---|
| The Hague | 31 December 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ..........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 4761

This annex lists the patent family members relating to the patent documents cited in the above-mentioned European search report.
The members are as contained in the European Patent Office EDP file on
The European Patent Office is in no way liable for these particulars which are merely given for the purpose of information.

31-12-2023

| Patent document cited in search report | Publication date | Patent family member(s) | Publication date |
|---|---|---|---|
| US 2020401891 A1 | 24-12-2020 | CN 114139714 A | 04-03-2022 |
|  |  | US 2020401891 A1 | 24-12-2020 |

EPO FORM P0459

For more details about this annex : see Official Journal of the European Patent Office, No. 12/82

**REFERENCES CITED IN THE DESCRIPTION**

**Patent documents cited in the description**

- IN 202221043520